Europäisches Patentamt

European Patent Office

Office européen des brevets

(11) Publication number: **0 374 927 A2**

## (12) EUROPEAN PATENT APPLICATION

(21) Application number: 89123677.0

(51) Int. Cl.⁵: **H01K 5/02, H01K 1/50**

(22) Date of filing: 21.12.89

(30) Priority: 21.12.88 JP 320721/88

(43) Date of publication of application:
27.06.90 Bulletin 90/26

(84) Designated Contracting States:
**DE FR GB NL**

(71) Applicant: **USHIO DENKI KABUSHIKI KAISHA**
**Asahi-Tokai Building 19-Floor No. 6-1,**
**Ote-machi 2-chome Chiyoda-ku**
**Tokyo, 100(JP)**

(72) Inventor: **Odagaki, Toru**
**No. 4-15, Hamano 3-chome**
**Okayama-shi Okayama(JP)**
Inventor: **Shiotani, Akira No. 206 Ushio Denki**
**Harima-Shataku**
**No. 1, Kagu- machi Bessho-cho**
**Himeji-shi Hyogo(JP)**

(74) Representative: **Zipse + Habersack**
**Kemnatenstrasse 49**
**D-8000 München 19(DE)**

(54) **Halogen incandescent lamp.**

(57) Disclosed herein is a halogen incandescent lamp in which a halogen-containing gas is sealed in a light-emitting tube made of alumina silicate glass and a filament assembly comprising light-emitting parts and light-unemitting parts is disposed along the tube axis of the light-emitting tube. The light-emitting tube comprises emitting space-surrounding portions, which are respectively divided and defined by constricted portions formed respectively at portions close to both ends of the light-unemitting parts of the filament assembly and enclose respectively the light-emitting parts, and unemitting space-surrounding portions enclosing respectively the light-unemitting parts, the temperature of the tube wall at the emitting space-surrounding portions is increased to at least 250°C, and the halogen-containing gas to be filled is composed only of a chlorine-containing gas free of any hydrogen atoms and an inert gas. A method for the production thereof, which comprises sealing only a chlorine-containing gas free of any hydrogen atoms and an inert gas in the light-emitting tube, is also disclosed.

FIG. I

# HALOGEN INCANDESCENT LAMP

## BACKGROUND OF THE INVENTION

1) Field of the Invention:

This invention relates to a halogen incandescent lamp making use of alumina silicate glass as a light-emitting tube and having light-emitting parts and light-unemitting parts, which are arranged alternately, and especially to a halogen incandescent lamp suitable for use as a light source for the original-lighting of an electrophotographic copying machine.

2) Description of the Prior Art:

Halogen incandescent lamps are used widely as light sources and/or heat sources. Halogen incandescent lamps, in which a filament assembly comprising light-emitting parts and light-unemitting parts is disposed in a light-emitting tube made of glass so as to extend along the tube axis, have suitably been used to date as light sources, for example, for the original-lighting of electrophotographic copying machines because their use facilitates the control of luminous intensity distribution.

Besides, quartz glass is used as a material of light-emitting tubes in halogen incandescent lamps because it is required to raise the temperature of the tube walls of the light-emitting tubes to 250°C or higher in order to successfully accomplish halogen cycle, while more active chlorine-containing gases are used as halogen gases in the halogen incandescent lamps having the light-emitting parts and the light-unemitting parts, which are arranged alternately, and used for the original-lighting of the electrophotographic copying machines because lighting and lights-out operations are conducted repeatedly.

The use of a chlorine-containing gas permits the accomplishment of smooth halogen cycle even when the temperature of the tube walls is rather low. It is however known that the gas corrodes tungsten, which is a material of a filament, due to its high activity, thereby resulting in early breaking of the filament. For this reason, hydrogen gas is often mixed to reduce the activity of the chlorine-containing gas.

By the way, there was developed a halogen incandescent lamp suitable for use in original-lighting for copy machines, which was able to lengthen the effective emission length, was excellent in vibration resistance and was a type in which constricted portions were formed in a light-emitting tube and a filament assembly was held by the constricted portions, and an application for a patent entitled "HALOGEN INCANDESCENT LAMP OF TUBE TYPE" was previously made (Japanese Patent Application No. 165828/1986). Quartz glass having a high melting point cannot be used in this type halogen incandescent lamp due to a problem in processing. Therefore, alumina silicate glass is used in the lamp.

It was however found that since the halogen incandescent lamp proposed in Japanese Patent Application No. 165828/1986 comprises emitting space-surrounding portions and unemitting space-surrounding portions, which are divided by constricted portions formed in the light-emitting tube, there are some cases where the temperature of the tube wall at the emitting space-surrounding portions is too high when a capillary tube of 6 mm or less in inner diameter is used as the light-emitting tube. As a result, there were some cases where the inner wall at the emitting space-surrounding portions was blackened and the halogen incandescent lamp hence reached the end of its service life when it was turned on and off repeatedly 20,000 times or so. Full investigation and study were carried out with a view toward clearing up this cause. As a result, it was found that $H_2O$ comes out of the light-emitting tube when the tube wall of the light-emitting tube made of the alumina silicate glass is heated to a temperature of 450°C or higher, whereby excess hydrogen fills the light-emitting tube and interrupts the halogen cycle. Namely, the following was found. The excess hydrogen bonds to chlorine to form hydrogen chloride. The amount of chlorine to be bonded to tungsten is hence insufficient. Therefore, oxygen formed by the decomposition of $H_2O$ bonds to tungsten to form $WO_2$ and $WO_3$, so that these oxides adhere to the tube wall to blacken it.

## SUMMARY OF THE INVENTION

2

The present invention has been made in view of the above problems of the prior art and has as its object the provision of a halogen incandescent lamp comprising a light-emitting tube made of alumina silicate glass, constricted portions formed in the light-emitting tube, and emitting space-surrounding portions and unemitting space-surrounding portions, which enclose light-emitting parts and light-unemitting parts of a filament assembly respectively, defined by the constricted portions, and being free from the early blackening of its tube wall resulting in its shortened service life.

In one aspect of this invention, there is thus provided a halogen incandescent lamp in which a halogen-containing gas is sealed in a light-emitting tube made of alumina silicate glass and a filament assembly comprising light-emitting parts and light-unemitting parts is disposed along the tube axis of the light-emitting tube. The light-emitting tube comprises emitting space-surrounding portions, which are respectively divided and defined by constricted portions formed respectively at portions close to both ends of the light-unemitting parts of the filament assembly and enclose respectively the light-emitting parts, and unemitting space-surrounding portions enclosing respectively the light-unemitting parts. The temperature of the tube wall at the emitting space-surrounding portions is increased to at least 250°C. The halogen-containing gas to be filled is composed only of a chlorine-containing gas free of any hydrogen atoms and an inert gas.

In another aspect of this invention, there is also provided a method for the production of a halogen incandescent lamp in which a filament assembly comprising light-emitting parts and light-unemitting parts is disposed along the tube axis of a light-emitting tube made of alumina silicate glass, the light-emitting tube comprises emitting space-surrounding portions, which are respectively divided and defined by constricted portions formed respectively at portions close to both ends of the light-unemitting parts of the filament assembly and enclose respectively the light-emitting parts, and unemitting space-surrounding portions enclosing respectively the light-unemitting parts, and the temperature of the tube wall at the emitting space-surrounding portions is increased to at least 250°C. The method comprises sealing only a chlorine-containing gas free of any hydrogen atoms and an inert gas in the light-emitting tube.

In the halogen incandescent lamp according to this invention, the chlorine-containing gas free of any hydrogen atoms and the inert gas only are used as a sealed gas. Therefore, its halogen cycle is smoothly accomplished even when the temperature of the tube wall at the unemitting space-surrounding portions is decreased due to its use for repeated lighting and lights-out. Besides, since hydrogen for reducing the activity of chlorine is supplied from the alumina silicate glass constructing the light-emitting tube when the temperature of the tube wall at the emitting space-surrounding portions has reached at least about 450°C, some corrosion of tungsten occurs only at an early stage until the supply of hydrogen, but subsequent progress is little. The early breaking of the lamp does not hence take place. Furthermore, the early blackening of the tube wall does not also occur because no excess hydrogen is present within the light-emitting tube.

As described above, since the halogen incandescent lamp of this invention uses the alumina silicate glass as a light-emitting tube to form the constricted portions in the light-emitting tube so as to hold the portions close to both ends of the filament assembly, it can be made excellent in vibration resistance. Further, since the chlorine-containing gas free of any hydrogen atoms and an inert gas are used as the sealed gas, the halogen cycle is performed smoothly even when the difference in temperature of the tube wall between the emitting space-surrounding portions and the unemitting space-surrounding portions, which are divided by the constricted portions, becomes greater. The breaking of the filament does not hence occur in a short period of time, and moreover the inhibition of the halogen cycle due to the excess of hydrogen does not also take place. Therefore, the tube wall does not become blackened, thereby allowing the halogen incandescent lamp to prolong its service life.


## BRIEF DESCRIPTION OF THE DRAWING


The above and other objects, features and advantages of the present invention will become apparent from the following description and the appended claims, taken in conjunction with the accompanying drawing, in which:

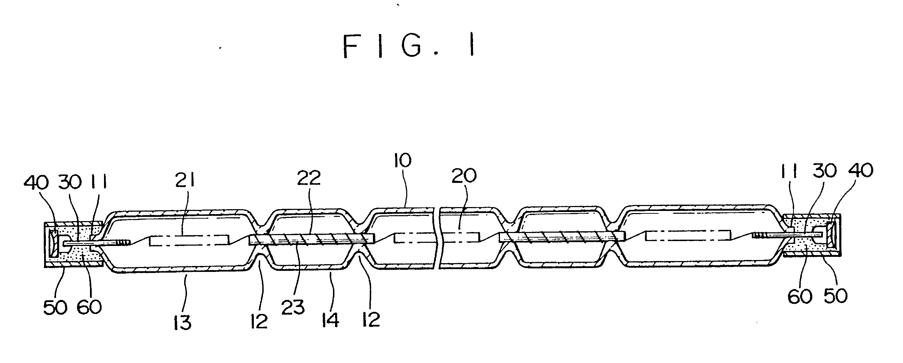

FIGURE 1 is an explanatory drawing of a halogen incandescent lamp according to this invention.


## DETAILED DESCRIPTION OF THE INVENTION AND PREFERRED EMBODIMENTS

3

Referring to the single figure, the embodiments of the present invention will hereinafter be described.

The single figure is an explanatory cross-sectional view showing a halogen incandescent lamp according to one embodiment of this invention. Numerals 10, 20, 30, 40 and 50 indicate a light-emitting tube formed of alumina silicate glass, a filament assembly, lead rods, contacts and cylindrical bases respectively.

In the incandescent lamp of this embodiment, the filament assembly 20 is held by a plurality of constricted portions 12 for supporting the filament, which have been formed in the light-emitting tube 10, so as to extend along the axis of the tube. Each sealing portion 11 is formed by constricting a portion of the glass tube, by which the lead rod 30 made of molybdenum, which has been provided so as to extend from the corresponding end of the filament assembly 20, is surrounded, by heating. A contact 40 is connected to the outer end of each lead rod 30 by welding. Each cylindrical base 50 made of ceramic covers the sealing portion 11, the lead rod 30 and the contact 40, and is fixed with a heat-resistant inorganic cement 60 filled therein.

The filament assembly 20 is composed of light-emitting parts 21 and light-unemitting parts 22, which are arranged alternately. Each of the light-emitting parts 21 is formed of a close-winding coil part, while each of the light-unemitting parts 22 is formed of a loose-winding coil part and a short-circuit rod 23 inserted therein.

The glass-made light-emitting tube 10 is composed of alumina silicate glass and has constricted portions 12 formed at predetermined positions. The positions to form the constricted portions 12 are close to both ends of the respective light-unemitting parts 22 of the filament assembly 20. Emitting space-surrounding portions 13 enclosing respectively the light-emitting parts 21 and unemitting space-surrounding portions 14 enclosing respectively the light-unemitting parts 22 are defined by the constricted portions 12. The clearance between each constricted portion 12 and the filament assembly 20 is extremely as short as, for example, 0.1 mm because each constricted portion 12 is formed in such a manner that the predetermined portion of the light-emitting tube 10 is constricted as much as possible so far as a filament assembly can be inserted when a lamp is to be assembled by inserting it into a tube having constricted portions formed in advance. Therefore, the heat transfer through the constricted portions 12 is extremely slight. Namely, using a halogen incandescent lamp according to this invention, which makes use of a light-emitting tube 10 of 4 mm in inner diameter and is 85 V and 270 W and has six light-emitting parts, temperature measurement was conducted. As a result, it was found that the temperature of the tube wall at the emitting space-surrounding portions 13 is 510°C during in operation, while that of the unemitting space-surrounding portions is 180°C.

Besides, an inert gas selected from argon, krypton and xenon and carbon tetrachloride, for example, as a chlorine-containing halogen gas are sealed in the light-emitting tube 10 made of the alumina silicate glass in this invention. Therefore, the halogen cycle at the unemitting space-surrounding portions 14 also takes place smoothly because the carbon tetrachloride is high in activity and the halogen cycle at low temperature is hence smoothly conducted. Although the filament made of tungsten is corroded at the emitting space-surrounding portions 13 and the unemitting space-surrounding portions 14 early in the operation because the activity of the chlorine is too high, the progress of the corrosion is restrained upon some elapsed time after the beginning of the operating owing to the supply of hydrogen derived from $H_2O$ coming out of the light-emitting tube 10 made of the alumina silicate glass. There is hence nothing to bring about a situation that the filament breaks early.

Results of a lighting experiment on the lamp according to this invention and a comparative halogen incandescent lamp with hydrogen gas sealed therein are then shown in Table 1. Incidentally, the service life, i.e., the numbers of lightings in terms of times, which are indicated in the table, are based on the results of the operation conducted repeatedly by defining lighting for 3.5 seconds and subsequent lights-out for 1.5 seconds as one cycle, and averages of experiments performed by making use of ten respective incandescent lamps are taken.

Table 1

| | $CCl_4:Ar:H_2$ (volume ratio) | Service life |
|---|---|---|
| Invention | 0.3:99.7:0 | Breaking in 220,000 cycles |
| Comparative Example | 0.3:99.1:0.6 | Blackenning in 20,000 cycles |

4

As is also understood from the above experimental results, in the halogen incandescent lamp according to this invention, even when $H_2O$ is released from the light-emitting tube 10 made of the alumina silicate glass excess hydrogen is not present because no hydrogen is sealed therein. As a result, since there was no inhibition of the halogen cycle to form $WO_2$ and $WO_3$, the early blackening of the light-emitting tube 10 did not also occur and the lamp could be used until tungsten of the filament material broke. It was hence possible to prolong its service life about 10 times compared to the conventional lamp.

Although one embodiment of this invention has been fully described above, various changes and modifications can be made thereto without departing from the spirit or scope of the invention as set forth herein. For example, any gases can be used as the chlorine-containing gas as long as they are free of any hydrogen atoms. Silicon tetrachloride having a function to prevent a light-emitting tube from blackening may be used.

## Claims

1. In a halogen incandescent lamp in which a halogen-containing gas is sealed in a light-emitting tube made of alumina silicate glass and a filament assembly comprising light-emitting parts and light-unemitting parts is disposed along the tube axis of the light-emitting tube, the improvement wherein the light-emitting tube comprises emitting space-surrounding portions, which are respectively divided and defined by constricted portions formed respectively at portions close to both ends of the light-unemitting parts of the filament assembly and enclose respectively the light-emitting parts, and unemitting space-surrounding portions enclosing respectively the light-unemitting parts, the temperature of the tube wall at the emitting space-surrounding portions is increased to at least 250°C, and the halogen-containing gas to be filled is composed only of a chlorine-containing gas free of any hydrogen atoms and an inert gas.

2. The halogen incandescent lamp as claimed in Claim 1, wherein the temperature of the tube wall is increased to at least about 450°C when the lamp is lighted.

3. The halogen incandescent lamp as claimed in Claim 1, wherein the filament assembly comprises light-emitting parts formed respectively of the close-winding coil parts and light-unemitting parts respectively formed of the loose-winding coil parts and short-circuit rods inserted respectively in the loose-winding coil parts, which both parts are arranged alternately, and is held at portions close to both ends of the respective light-unemitting parts by the constricted portions.

4. The halogen incandescent lamp as claimed in Claim 1, wherein the chlorine-containing gas free of any hydrogen atoms is carbon tetrachloride.

5. The halogen incandescent lamp as claimed in Claim 1, wherein the chlorine-containing gas free of any hydrogen atoms is silicon tetrachloride.

6. In a method for the production of a halogen incandescent lamp in which a filament assembly comprising light-emitting parts and light-unemitting parts is disposed along the tube axis of a light-emitting tube made of alumina silicate glass, the light-emitting tube comprises emitting space-surrounding portions, which are respectively divided and defined by constricted portions formed respectively at portions close to both ends of the light-unemitting parts of the filament assembly and enclose respectively the light-emitting parts, and unemitting space-surrounding portions enclosing respectively the light-unemitting parts, and the temperature of the tube wall at the emitting space-surrounding portions is increased to at least 250°C, the improvement comprising sealing only a chlorine-containing gas free of any hydrogen atoms and an inert gas in the light-emitting tube.

FIG. I